# EUROPEAN PATENT SPECIFICATION

(11) **EP 2 376 561 B1**
(45) Date of publication and mention of the grant of the patent: **03.10.2018**
(21) Application number: 09835733.8
(22) Date of filing: 22.12.2009
(51) Int. Cl.: C08J 5/18, C08L 83/04, C08K 5/54, C09D 183/14, C09D 183/04

(54) **AMORPHOUS MICROPOROUS ORGANOSILICATE COMPOSITIONS**
AMORPHE MIKROPORÖSE ORGANOSILIKATZUSAMMENSETZUNGEN
COMPOSITIONS D'ORGANOSILICATE MICROPOREUSES AMORPHES

(30) Priority: 23.12.2008 US 140131 P
(43) Date of publication of application: 19.10.2011
(73) Proprietor: 3M Innovative Properties Company, St. Paul, MN 55133-3427 (US)
(72) Inventor: THOMAS, John, Christopher, Saint Paul, Minnesota 55133-3427 (US); RAKOW, Neal, A., Saint Paul, Minnesota 55133-3427 (US); TREND, John, E., Saint Paul, Minnesota 55133-3427 (US)
(74) Representative: Isarpatent
(86) International application number: PCT/US2009/069099
(87) International publication number: WO 2010/075328

(56) References cited:
- KR-A- 20030 086 637
- KR-B1- 100 373 210
- US-A- 5 321 102
- US-A1- 2007 184 557
- US-A1- 2007 243 395
- RAMAN N K ET AL: "Organic @?template@? approach to molecular sieving silica membranes", JOURNAL OF MEMBRANE SCIENCE, ELSEVIER BV, NL, vol. 105, no. 3, 29 September 1995 (1995-09-29), pages 273-279, XP004041304, ISSN: 0376-7388, DOI: 10.1016/0376-7388(95)00067-M
- BOURY B ET AL: "GENERATION OF MICROPOROSITY IN A HYBRID MATERIAL. ACCESS TO PILLARED AMORPHOUS ORGANOSILICATE", CHEMISTRY OF MATERIALS, AMERICAN CHEMICAL SOCIETY, US, vol. 11, 1 January 1999 (1999-01-01), pages 2796-2803, XP001021032, ISSN: 0897-4756, DOI: 10.1021/CM991042T

## Description

### Field of the Disclosure

This disclosure relates generally to organosilicate compositions, and microporous articles such as films, prepared from organosilicate materials.

### Background

Porous organosilicate compositions have been recognized as useful materials, particularly as molecular sieves, for use as catalysts or catalyst supports for a variety of organic chemical transformations, and as film-forming compositions for electronic applications. These porous materials typically may be described as mesoporous, meaning that the average pore size diameter for these materials is in the range of 2-50 nanometers. Typically these compositions have been prepared, for example by the grafting of organofunctional groups onto a pre-made silica framework, or by the surfactant-directed assembly of "bis-silyl" mesostructures containing the units -O-Si-R-Si-O-.

In US 2007/243395 A1 a composite resin is described which is produced by hydrolyzing and condensing a silane compound in the presence of porous and/or hollow inorganic oxide fine particles.

KR 2003 0086637 A relates to a low dielectic insulator layer composition for formation of a semiconductor device with controlled micropores.

KR 100 373 210 B1 discloses a method of producing a low dielectric insulating material for producing semiconductor devices.

N.K. Raman and C.J. Brinker discuss in "Organic "template" approach to molecular sieving silica membranes", Journal of Membrane Science 105, 1995, pp. 273-279 a "template" approach to prepare microporous inorganic membranes.

B. Roury et al. disclose in "Generation of Microporosity in a Hybrid Material. Access to Pillared Amorphous Organosilicate", Chem Mater. 1999, 11, p. 2796-2803 a route for creating a controlled porosity in a hydrid xerogel.

### Summary

Organosilicate materials which are hydrophobic, amorphous, and substantially microporous, are described. These materials are prepared without the use of porogens. These materials are suitable for a wide range of uses, including as detection layers for sensing applications.

Films are disclosed which comprise hydrophobic, amorphous, substantially microporous, organo-functional organosilicate compositions. The organosilicate compositions comprise micropores which define a pore volume. The organo-functional silicate composition comprises a composition prepared from a precursor reaction mixture comprising a solvent, at least two organo-functional hydrolysable silanes, and an acid, wherein the precursor reaction mixture is free of porogens. The organo-functional organosilicate composition comprises RSiO₃ units linked through bridging Si-O-Si linkages in a silica matrix, where R is a hydrocarbon group or substituted hydrocarbon group, and wherein the R group is bonded to the silica matrix by a covalent Si-C bond. At least 50% of the total pore volume comprises pores with a diameter of 2.0 nanometers or less.

Additionally, methods for preparing films are disclosed. These methods comprise providing a substrate, providing a precursor reaction mixture comprising a solvent, at least two organo-functional hydrolysable silanes, and an acid, wherein the precursor reaction mixture is free of porogens, coating the precursor mixture on the substrate; and heating the coated mixture to a temperature sufficient to form a calcined film, wherein the film comprises a hydrophobic, amorphous, substantially microporous, organo-functional organosilicate composition comprising micropores which define a pore volume, wherein the organo-functional organosilicate composition comprises RSiO₃ units linked through bridging Si-O-Si linkages in a silica matrix, where R is a hydrocarbon group or substituted hydrocarbon group, and wherein the R group is bonded to the silica matrix by a covalent Si-C bond. At least 50% of the total pore volume comprises pores with a diameter of 2.0 nanometers or less.

### Detailed Description

Films and articles which contain microporous organosilicate materials are desirable. Typically porogens are used to help facilitate the formation of porous materials. The use of porogens can be disadvantageous because, for example, in some instances it can be difficult to remove from the formed porous material. Additionally, the addition of porogens can complicate the reaction mixture used to form the porous material and lead to batch to batch variance if the same amount of porogen is not used with each batch. Therefore, the ability to prepare microporous materials without the use of porogens may be desirable.

Microporous materials are porous materials that have average pore diameter sizes less than about 2 nanometers. This contrasts with mesoporous materials which have average pore diameter sizes in the range of 2-50 nanometers. Microporous materials can have advantages over mesoporous materials, especially in their use in sensors to detect analytes because, for example, microporous materials can have improved sensitivity to analytes. Additionally, microporous organosilicate materials, because of their organic groups, are naturally hydrophobic and therefore are less susceptible to the adsorption of moisture than, for example, inorganic materials such as silicates. This disclosure provides films which comprise hydrophobic, amorphous, substantially microporous, organosilicate compositions.

As used herein, the term "mesoporous" refers to porous materials that have average pore diameter sizes in the range of 2-50 nanometers.

As used herein, the term "microporous" refers to porous materials that have average pore diameter sizes less than about 2 nanometers.

As used herein, the term "hydrophobic" refers to compositions which do not attract water. The hydrophobic nature of compositions may be measured in a variety of ways, including by the adsorption of water over a given period of time at a given relative humidity. Such a test is defined in greater detail in the Examples section.

As used herein, the term "amorphous" refers to compositions which are substantially non-crystalline. Typically when scanned with a X-ray diffractometer the compositions do not show a discernable X-ray diffraction pattern when scanned from, for example, 0.5 to 55 degrees (2θ).

As used herein, the term "organosilicate" refers to compositions that are hybrids containing a covalently linked three dimensional silica network (-Si-O-Si-) with some organo-functional groups R, where R is a hydrocarbon or heteroatom substituted hydrocarbon group linked to the silica network by at least one Si-C bond.

As used herein, the term "hydrocarbon group" refers to a group which contains carbon and hydrogen bonds. A hydrocarbon group may be linear, branched, cyclic, or aromatic. Examples of hydrocarbon groups are alkyl groups and aryl groups.

As used herein, the term "substituted hydrocarbon group" is a hydrocarbon group which contains one or more heteroatoms, such as oxygen, nitrogen, sulfur, phosphorous, boron, a halogen (F, Cl, Br, or I), arsenic, tin or lead. The heteroatoms may be pendant or catenary.

As used herein, the term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, and ethylhexyl.

As used herein, the term "aryl" refers to a monovalent group that is aromatic and carbocyclic. The aryl can have one to five rings that are connected to or fused to the aromatic ring. The other ring structures can be aromatic, non-aromatic, or combinations thereof. Examples of aryl groups include, but are not limited to, phenyl, biphenyl, terphenyl, anthryl, naphthyl, acenaphthyl, anthraquinonyl, phenanthryl, anthracenyl, pyrenyl, perylenyl, and fluorenyl.

As used herein, the term "alkylene" refers to a divalent group that is a radical of an alkane. The alkylene can be straight-chained, branched, cyclic, or combinations thereof. The alkylene often has 1 to 20 carbon atoms. In some embodiments, the alkylene contains 1 to 18, 1 to 12, 1 to 10, 1 to 8, 1 to 6, or 1 to 4 carbon atoms. The radical centers of the alkylene can be on the same carbon atom (i.e., an alkylidene) or on different carbon atoms.

As used herein, the term "arylene" refers to a divalent group that is carbocyclic and aromatic. The group has one to five rings that are connected, fused, or combinations thereof. The other rings can be aromatic, non-aromatic, or combinations thereof. In some embodiments, the arylene group has up to 5 rings, up to 4 rings, up to 3 rings, up to 2 rings, or one aromatic ring. For example, the arylene group can be phenylene.

As used herein, the term "aralkylene" refers to a divalent group of formula -R^{a}-Ar^{a}- where R^{a} is an alkylene and Ar^{a} is an arylene (i.e., an alkylene is bonded to an arylene).

As used herein, the term "alkoxy" refers to a group of the formula -OR, where R is an alkyl, aryl, or substituted alkyl group.

As used herein, the term "acetoxy" refers to a group of the formula -OC(O)CH₃, where C(O) refers to a carbonyl group C=O.

As used herein, the term "amino" refers to a groups of the formula -NR₂, where R is an alkyl, aryl, or substituted alkyl group.

As used herein, the term "pore size" refers to the diameter of a pore and the term "pore volume" refers to the volume of a pore.

As used herein, the term "porogen" refers to a material that facilitates the formation of a porous structure. Solvents typically are not considered to be porogens in this context.

As used herein, the term "analyte" refers to an organic molecule or series of molecules which may be liquids or gases and whose presence it is desirable to detect.

As used herein, the terms "calcine" and "calcination" refers to heating a mixture, such as a sol, to a temperature below the melting point to drive off volatile materials and form an organosilicate network.

As used herein, the term "sol" refers to a precursor mixture containing reactive organosilicate materials in a solvent that forms a continuous organosilicate network upon calcination.

The films of this disclosure comprise hydrophobic, amorphous, substantially microporous, organo-functional organosilicate compositions that are prepared without the use of porogens. The films are useful in a variety of applications, especially applications which involve the capture and/or analysis of organic analytes.

Organosilicate compositions are hybrid compositions that contain a silica framework as well as organo-functional groups. The organosilicate compositions comprise RSiO₃ units linked through bridging Si-O-Si linkages, where R is a hydrocarbon group or substituted hydrocarbon group. The R group is bonded to the silica matrix by a covalent Si-C bond.

The organosilicate compositions of this disclosure may be described as having a relatively high organic content. The relatively high organic content of the organosilicate compositions is a desirable feature because, as is discussed below, it affects the hydrophobicity of the organosilicate compositions. The relatively high organic content may be achieved in a number of ways. For example, there may be many RSiO₃ units present with R being relatively small hydrocarbon groups such as methyl, ethyl, propyl, etc. to give a high organic content or there may be fewer RSiO₃ units with R being relatively large hydrocarbon groups such as aryl.

A wide variety of organo-functional groups (R groups in the RSiO₃ units) are suitable for use in the organosilicate compositions. The organo-functional groups may be simple alkyl or alkylene groups such as methyl, ethyl, propyl, methylene, ethylene, propylene, and the like or more complex alkyl or alkylene groups. The organo-functional groups may also be aromatic groups such as aryl, substituted aryl, arylene, or the like. In some embodiments, the R group may be alkylene or arylene group that links two SiO₃ units (e.g. -O₃Si-R-SiO₃-). Examples of suitable aryl and arylene groups include, for example, phenyl, tolyl, phenylene, tolylene, bisphenylene, and the like.

In some embodiments, the organosilicate compositions may contain at least some aromatic content (i.e. aryl and/or arylene groups). Arylene groups, where the arylene group is linked to 2 silicon atoms, are particularly suitable because it is believed that the rigid aromatic rings help to provide the desirable pore structure. Among the particularly suitable aryl and arylene groups are phenyl, naphthyl, and bisphenylene.

The organo-functional nature of the organosilicates tend to render the compositions hydrophobic, since organic groups are naturally oleophilic (literally "oil loving") and are more compatible with other organo-functional species than with water. The hydrophobic nature of the compositions makes these materials less likely to adsorb moisture from the atmosphere. The adsorption of moisture from the atmosphere is undesirable, especially in instances where these materials are utilized in sensor applications where sensing of organic molecules is desired. If the pores were to substantially adsorb moisture from the environment, the ability of the pores to adsorb organic analytes of interest would be diminished. However, since the compositions are hydrophobic, this renders them relatively unaffected by moisture from the environment.

Hydrophobicity is a desirable feature because, especially if the materials are to be used in sensor applications, it is desirable that moisture from the air not over-ride the sensitivity to the desired analyte. For example, if the material is used as a detection layer and it were hydrophilic, moisture from the atmosphere would readily adsorb to the pores of the material and inhibit the adsorption of the desired analyte.

Hydrophobicity can be measured in a variety of ways. One technique that is particularly useful is to expose the hydrophobic, amorphous, substantially microporous, organosilicate compositions to an environment with a given relative humidity, such as 50% relative humidity at room temperature, for a sufficient period of time such that the adsorbed water and water in the atmosphere are at equilibrium. This equilibrium state can be determined by plotting a graph of time versus adsorption and observing where the profile curve plateaus. Typically, the film adsorbs water into less than 65% of the available pore volume at relative humidity of 50% at equilibrium. In some embodiments, the film adsorbs water into less than 50% of the available pore volume at a relative humidity of 50% at equilibrium. In some embodiments the film adsorbs water into less than 30% of the available pore volume at a relative humidity of 50% at equilibrium.

The organosilicate compositions are amorphous or substantially amorphous, meaning that they are free or essentially free of crystallinity. While not wishing to be bound by theory, it is believed that amorphous organosilicates contain more diverse porous structures making them suitable for a wide range of analytes in, for example, sensing applications.

The amorphous nature of the organosilicate compositions can be determined, for example, through the use of an X-ray diffractometer. Typically, when scanned with a X-ray diffractometer, the compositions do not show a discernable X-ray diffraction pattern when scanned from a low angle to a wide angle such as from 0.5 to 55 degrees (2θ). By no discernable X-ray diffraction pattern it is meant that X-ray diffraction data are essentially featureless, indicating no evidence for the presence of structural order.

The organosilicate compositions are substantially microporous. Porous materials have been classified in many different ways. The IUPAC definitions for porous materials define porous materials with an average pore diameter of less than 2 nanometers as microporous, porous materials with an average pore diameter of from 2-50 nanometers as mesoporous, and porous materials with an average pore diameter of greater than 50 nanometers as macroporous. In the organosilicate compositions of this disclosure, at least 50% of the total pore volume comprises pores with a diameter of 2.0 nanometers or less. In some embodiments at least 50% of the total pore volume comprises pores with a diameter of 0.6-1.3 nanometers.

The films of this disclosure are prepared from precursor mixtures which are free of porogens. In this context porogens refer to chemical compounds added to the precursor mixture to aid in the formation of the porous structure. Solvents and other components added to the reaction mixture for a different purpose are not considered to be porogens. Typically a precursor mixture is prepared, coated on a substrate and heated to dry and/or calcine the precursor mixture to form a hydrophobic, amorphous, substantially microporous, organosilicate film.

The precursor mixture may contain a variety of different materials. Among the suitable materials are solvents, at least two hydrolysable silanes, and acids.

Typically the precursor mixture contains at least one solvent. The solvent or solvents function to solubilize and dilute the reactants and as a reaction medium for the hydrolysis and condensation reactions that occur in the precursor mixture. The solvent should be able to at least partially solubilize the reactants. Typically the solvent is at least partially miscible with water, since often aqueous reagents such as aqueous acids are used. Suitable solvents include, for example: alcohols such as methanol, ethanol, isopropanol, tert-butanol; ketones such as acetone and methyl ethyl ketone; ethers such as tetrahydrofuran; esters such as ethyl acetate; amides such as dimethylformamide; or mixtures thereof.

The precursor mixture contains at least two hydrolysable silanes. Hydrolysable silanes are compounds of the general formula Rₙ-{Si(Z)₄₋ₙ}ₓ where R is an x-valent hydrocarbon or substituted hydrocarbon group, x is an integer of 1 or greater, Z is a hydrolysable group, and n is an integer of 1, 2 or 3. Suitable hydrolysable groups include alkoxy, halo, acetoxy, or amino groups. In some embodiments x is 1, n is 1, the R group is a hydrocarbon group such as an alkyl or aryl group, and Z is an alkoxy. In other embodiments, x is 2, n is 1, R is an alkylene, arylene, aralkalene group, and Z is an alkoxy.

The precursor mixture contains at least two hydrolysable silanes. In some embodiments, the precursor mixture contains a hydrolysable silane of the general structure R¹-Si(OR²)₃ as well as a hydrolysable silane of the general structure (R³O)₃Si-R⁵-Si(OR⁴)₃ where R¹, R², R³, and R⁴, are alkyl or aryl groups, and R⁵ is an alkylene, arylene or aralkylene group. Examples of suitable hydrolysable silanes include, for example methyl trimethoxy silane, ethyl trimethoxy silane, phenyl trimethoxy silane, 4,4'-bis(triethoxysilyl)-1,1'-biphenyl, and the like. In some embodiments the precursor mixture contains phenyl trimethoxy silane and 4,4'-bis(triethoxysilyl)-1,1'-biphenyl.

The amount of hydrolysable silanes present in the precursor mixture will vary depending upon the nature of the hydrolysable silane or silanes and the desired properties of the formed organosilicate composition. Typically, hydrolysable silanes are present in the range of about 2-25 weight % based upon the total weight of the precursor mixture.

The precursor mixture contains an acid to facilitate the hydrolysis and condensation reactions of the hydrolysable silanes. Any suitable acid can be used as long as it is compatible with the precursor mixture and aids in the hydrolysis reaction. Examples of suitable acids include, for example, organic acids, phosphonium acids, ammonium acids and mineral acids. Organic acids include, for example, carboxylic acids such as acetic acid, sulfonic acids such as alkyl sulfonic acids, phosphonic acids such as alkyl phosphonic acids of the general formula RP(O)(OH)₂ where R is an alkyl group and phosphinic acids such as alkyl phosphinic acids of the general formula R₂P(O)(OH) where each R independently is an alkyl group. Phosphonium acids include compounds of the type R₃PH⁺ where each R independently is a hydrogen or an alkyl or an aryl group. Ammonium acids include compounds of the type R₃NH⁺ where each R independently is a hydrogen or an alkyl or an aryl group. Mineral acids are inorganic acids that include, for example, hydrochloric acid, nitric acid, sulfuric acid, boric acid, phosphoric acid, hydrofluoric acid and the like. Typically mineral acids are used in their aqueous form, that is to say, the acid is dissolved in water. Generally, due to their availability and ease of use, aqueous mineral acids are used. In some embodiments the acid is aqueous hydrochloric acid.

The precursor mixture can be deposited on a substrate to form a film. The precursor may be deposited on a substrate using a variety of coating techniques such as, for example spin coating, dip coating, spray coating, roll coating, and printing techniques including, for example, inkjet printing and screen printing. Spin coating is particularly useful.

The substrate may be any suitable substrate upon which it is desirable to prepare an organosilicate film and which can withstand the calcination step to form the organosilicate film. Examples of substrates include, for example, metal and metal oxide plates and foils, glass plates, ceramic plates and articles, silicon wafers, polymers capable of withstanding the calcination step such as polyimides and silicones, and the like.

Once the precursor mixture is coated on a substrate it is typically subjected to a heat treatment to dry and calcine the mixture. The heating step may be to a relatively low temperature such as for example 30-100°C. Generally the heating step involves higher temperatures. Typically the coated precursor mixture is heated to a temperature in the range of about 200°C to about 500°C. In some embodiments the heating step is to about 450°C.

Following the heat treatment additional optional processing steps may be carried out. For example, it may be desirable to treat the organosilicate film with a treating agent. The treating agent can further modify the organosilicate film to make it, for example, more hydrophobic. An example of a suitable treating agent is an organosilane treating agent such as a alkyl disilazane such as hexamethyl disilazane. Such a treatment can be carried out by exposing the film to vapors of hexamethyl disilazane.

The organosilicate compositions of this disclosure can be used in a wide variety of articles including sensor articles, such as sensor articles which utilize a microporous adsorption layer as part of the sensing apparatus. Examples of such sensors or presented in, for example, US Patent Publication Nos. 2008/006375 (Rakow et al.), 2004/0184948 (Rakow et al.), and 2007/0184557 (Crudden et al.).

The microporous and hydrophobic nature of the compositions of this disclosure make them suitable to adsorb analytes such as organic chemical vapors at low concentrations. Adsorption of the organic chemical vapor causes a change in the organosilicate film, a change which can be detected either mechanically or optically.

### Examples

These examples are merely for illustrative purposes only and are not meant to be limiting on the scope of the appended claims. All parts, percentages, ratios, etc. in the examples and the rest of the specification are by weight, unless noted otherwise. Solvents and other reagents used were obtained from Sigma-Aldrich Chemical Company; Milwaukee, Wisconsin unless otherwise noted.

**Table of Abbreviations**

| Abbreviation or Trade Designation | Description |
|---|---|
| BTSBP | 4,4'-bis(triethoxysilyl)-1,1'-biphenyl |
| PTMS | phenyl(trimethoxy)silane |
| NTES | 1-naphthyl(triethoxy)silane |
| HMDS | hexamethyldisilazane |
| Silicon Wafers | P<100>, 0-100 Ω•cm 500 ± 20 µm thickness silicon wafers, commercially available from University Wafers, cut into 25 x 25 mm² sections and cleaned with acetone prior to use. |

### Test Methods

### Determination of pore sizes

Determination of pore size was done using nitrogen adsorption measurements. Material to be tested was coated on a 100 mm diameter Silicon Wafer. The wafer was coated repeatedly using the spin-coating method and subsequently calcined as described in the Examples. The film was recovered and used for nitrogen adsorption measurements. Total pore volume was measured by nitrogen adsorption using a gas adsorption analyzer available under the trade designation "QUANTACHROME AUTOSORB IC" (Quantachrome Instruments, Boynton Beach, FA) operated according to the manufacturer's directions using a 74 point micro pore analysis.

### Hydrophobicity Determination

Coated sensor pieces were placed into a controlled humidity test system and were monitored by optical spectroscopy. An Ocean Optics fiber optic probe, LS-1 light source and USB-2000 spectrophotometer were used for monitoring the sensor. Air streams were generated at controlled percentages of relative humidity by flowing the air through a thermostatted container of water. The sensors were exposed to the humid air at a flow rate of 2.5 Liters/minute, and the reflected optical spectrum between 400 nm and 800 nm was observed. Subsequently, the change in the wavelength of the spectral maximum (or minimum) was plotted as a function of the concentration of the vapor. A larger wavelength shift correlates to a larger amount of water vapor adsorption into the porous material.

The amount of water filling the pores at 50% relative humidity was determined using the following procedure. The amount of water present in the pores at 50% relative humidity at equilibrium was compared to the amount of water present when the pores are empty of water and when the pores are essentially filled with water. To make these comparisons the assumptions were made that the pores are essentially empty under relatively low relative humidity (approximately 5% relative humidity) and the pores are essentially full at equilibrium under a 90% relative humidity environment. The difference in optical peak positions were measured under 5%, 50% and 90% relative humidity. The difference in the peak positions between samples at 5% and 50% relative humidity is reported as Δ_{50%}, the difference in peak shift between samples at 5% and 90% relative humidity is reported as Δ_{90%}. The ratio of these 2 values, Δ_{50%}/Δ_{90%}, gives a value that is indicative of the amount of water present in the pores at 50% relative humidity. Multiplying this ratio by 100% gives a percentage of pores filled with water at 50% relative humidity at equilibrium.

### X-ray Scattering

Samples were tested for X-ray scattering to determine the amorphous nature of the sample. Reflection geometry data were collected in the form of a survey scan by use of a Philips vertical diffractometer, copper K_{α} radiation, and proportional detector registry of the scattered radiation. The diffractometer was fitted with variable incident beam slits, fixed diffracted beam slits, and graphite diffracted beam monochromator. The survey scan was conducted from 5 to 55 degrees (2θ) using a 0.04 degree step size and 4 second dwell time. X-ray generator settings of 45 kV and 35 mA were employed. Additional reflection geometry low angle data were collected by use of a Huber 4-circle diffractometer, copper K_{α} radiation, and scintillation detector registry of the scattered radiation. The incident beam was collimated to a 700 µm pinhole and nickel filtered. Scan was conducted from 0.5 to 15 degrees (2θ) using a 0.01 degree step interval and 60 second dwell time. X-ray generator settings of 40 kV and 20 mA were employed.

### Synthesis Examples: Preparation of Reagent Solutions:

A series of reagent solutions were prepared that were used to prepare the precursor mixtures in the examples below.

### Solution 1

In a polyethylene bottle was combined 1-methoxy-2-propanol (1.044 grams), BTSBP (0.247 gram), and 0.2 Molar HCl (aq) (0.050 gram).

### Solution 2

In a polyethylene bottle was combined 1-methoxy-2-propanol (1.038 grams), BTSBP (0.223 gram), PTMS (0.026 gram), and 0.2 Molar HCl (aq) (0.047 gram).

### Solution 3

In a polyethylene bottle was combined 1-methoxy-2-propanol (1.044 grams), BTSBP (0.207 gram), PTMS (0.052 gram), and 0.2 M HCl (aq) (0.052 gram).

### Solution 4

In a polyethylene bottle was combined 1-methoxy-2-propanol (1.049 grams), BTSBP (0.179 gram), PTMS (0.077 gram), and 0.2 M HCl (aq) (0.048 gram).

### Solution 5

In a polyethylene bottle was combined 1-methoxy-2-propanol (1.043 grams), BTSBP (0.146 gram), PTMS (0.101 gram), and 0.2 M HCl (aq) (0.052 gram).

### Solution 6

In a polyethylene bottle was combined 1-methoxy-2-propanol (1.039 grams), BTSBP (0.124 gram), PTMS (0.129 gram), and 0.2 Molar HCl (aq) (0.050 gram).

### Solution 7

In a polyethylene bottle was combined 1-methoxy-2-propanol (1.039 grams), BTSBP (0.107 gram), PTMS (0.151 gram), and 0.2 M HCl (aq) (0.050 gram).

### Solution 8

In a polyethylene bottle was combined 1-methoxy-2-propanol (1.037 grams), BTSBP (0.225 gram), NTES (0.037 gram), and 0.2 M HCl (aq) (0.050 gram).

### Solution 9

In a polyethylene bottle was combined 1-methoxy-2-propanol (1.043 grams), BTSBP (0.199 gram), NTES (0.076 gram), and 0.2 M HCl (aq) (0.053 gram).

### Solution 10

In a polyethylene bottle was combined 1-methoxy-2-propanol (1.046 grams), BTSBP (0.182 gram), NTES (0.076 gram), and 0.2 M HCl (aq) (0.050 gram).

### Solution 11

In a polyethylene bottle was combined 1-methoxy-2-propanol (1.046 grams), BTSBP (0.154 gram), NTES (0.155 gram), and 0.2 M HCl (aq) (0.050 gram).

### Examples 1-7:

For Examples 1-7 (Example 1: reference example), the solutions shown in Table 1 were used. The solutions were allowed to age at room temperature for 120 minutes and then spin coated onto Silicon Wafers using a Headway Research EC101 DT-R790 spin-coater with a 2 centimeter diameter chuck. Each Silicon Wafer section was flooded with several drops of solution prior to spinning. The spin-coating was performed at 1500 rpm for 60 seconds. Coated sections were calcined in air in a box furnace at a rate of 1°C/min to a temperature of 450°C, with a 5 minute hold at 450°C followed by gradual cooling to ambient temperature. Hydrophobicity testing was carried out as described in the Test Method above, the results are shown in Table 4. X-ray Scattering analysis was carried out on samples of Examples 6 and 7 using the Test Method described above. The results of the test demonstrated no evidence for the presence of structural order. Both the low and wide angle data obtained were essentially featureless.

A sample of the coating solution used for Example 5 was used to prepare a sample to determine the pore size. Testing using the pore size determination test shown in the Test Methods above was carried out. The results of the test demonstrated that 61% of the total pore volume contained pores with a pore diameter of 2.0 nanometers or less.

**Table 1**

| Example | Solution Used | Composition Ratio BTSBP:PTMS |
|---|---|---|
| 1 | 1 | 100:0 |
| 2 | 2 | 90:10 |
| 3 | 3 | 80:20 |
| 4 | 4 | 70:30 |
| 5 | 5 | 60:40 |
| 6 | 6 | 50:50 |
| 7 | 7 | 40:60 |

### Examples 8-11:

For Examples 8-11, the solutions shown in Table 2 were used. The solutions were allowed to age at room temperature for 120 minutes and then spin coated onto Silicon Wafers using a Headway Research EC101 DT-R790 spin-coater with a 2 centimeter diameter chuck. Each Silicon Wafer section was flooded with several drops of solution prior to spinning. The spin-coating was performed at 1500 rpm for 60 seconds. Coated sections were calcined in air in a box furnace at a rate of 1°C/min to a temperature of 450°C, with a 5 minute hold at 450°C followed by gradual cooling to ambient temperature. Hydrophobicity testing was carried out as described in the Test Method above, the results are shown in Table 4. X-ray Scattering analysis was carried out on samples of Examples 8-11 using the Test Method described above. The results of the test demonstrated no evidence for the presence of structural order. Both the low and wide angle data obtained were essentially featureless.

**Table 2**

| Example | Solution Used | Composition Ratio BTSBP:NTES |
|---|---|---|
| 8 | 8 | 90:10 |
| 9 | 9 | 80:20 |
| 10 | 10 | 70:30 |
| 11 | 11 | 60:40 |

### Examples 12-15:

For Examples 12-15, the solutions shown in Table 3 were used. The solutions were allowed to age at room temperature for 120 minutes and then spin coated onto Silicon Wafers using a Headway Research EC101 DT-R790 spin-coater with a 2 centimeter diameter chuck. Each Silicon Wafer section was flooded with several drops of solution prior to spinning. The spin-coating was performed at 1500 rpm for 60 seconds. Coated sections were calcined in air in a box furnace at a rate of 1°C/min to a temperature of 450°C, with a 5 minute hold at 450°C followed by gradual cooling to ambient temperature. The coatings were placed in a polystyrene petri dish with a reservoir of HMDS (1-2 milliliters). The petri dish was covered, and the sections were allowed to react with HMDS vapor for 24 hours. Hydrophobicity testing was carried out as described in the Test Method above, the results are shown in Table 4.

**Table 3**

| Example | Solution Used | Composition Ratio BTSBP:PTMS |
|---|---|---|
| 12 | 2 | 90:10 |
| 13 | 3 | 80:20 |
| 14 | 4 | 70:30 |
| 15 | 5 | 60:40 |

**Table 4**

| Example | Δ_{50%} | Δ_{90%} | Ratio Δ_{50%}/Δ_{90%} | Pores filled (%) |
|---|---|---|---|---|
| 1 | 13.3 | 29.0 | 0.46 | 46 % |
| 2 | 9.5 | 16.1 | 0.59 | 59 % |
| 3 | 8.8 | 15.7 | 0.56 | 56 % |
| 4 | 8.7 | 22.8 | 0.38 | 38 % |
| 5 | 3.8 | 16.1 | 0.24 | 24 % |
| 6 | 3.4 | 22.9 | 0.15 | 15 % |
| 7 | 2.8 | 15.6 | 0.18 | 18 % |
| 8 | 16.9 | 29.5 | 0.57 | 57 % |
| 9 | 17.4 | 29.4 | 0.59 | 59 % |
| 10 | 20.7 | 34.9 | 0.59 | 59 % |
| 11 | 16.2 | 33.2 | 0.49 | 49 % |
| 12 | 11.6 | 19.3 | 0.60 | 60 % |
| 13 | 9.9 | 17.0 | 0.58 | 58 % |
| 14 | 6.6 | 15.9 | 0.42 | 42 % |
| 15 | 4.5 | 13.3 | 0.33 | 33 % |

## Claims

1. A film comprising:
a hydrophobic, amorphous, substantially microporous, organo-functional organosilicate composition comprising micropores which define a pore volume, and wherein the organo-functional organosilicate composition comprises a composition prepared from a precursor reaction mixture comprising:
a solvent;
at least two organo-functional hydrolysable silanes; and
an acid, wherein the precursor reaction mixture is free of porogens; and
wherein the organo-functional organosilicate composition comprises RSiO₃ units linked through bridging Si-O-Si linkages in a silica matrix, where R is a hydrocarbon group or substituted hydrocarbon group, and wherein the R group is bonded to the silica matrix by a covalent Si-C bond, wherein at least 50% of the total pore volume comprises pores with a diameter of 2.0 nanometers or less.

2. The film of claim 1 wherein the film adsorbs water into less than 30% of the available pore volume at a relative humidity of 50% at equilibrium.

3. The film of claim 1 wherein the composition does not display a detectable X-ray diffraction pattern when scanned from 0.5 to 55 degrees (2θ).

4. The film of claim 1 wherein at least 50% of the total pore volume comprises pores with a diameter of 0.6-1.3 nanometers.

5. The film of claim 1 wherein the hydrolysable silanes comprise organo-functional alkoxy silanes, wherein at least one organo-functional alkoxy silane is of the formula:
R¹-Si(OR²)₃
wherein R¹ and R² are alkyl or aryl groups.

6. The film of claim 1 wherein the hydrolysable silanes comprise organo-functional alkoxy silanes, wherein at least one organo-functional alkoxy silane is of the formula:
(R³O)₃Si-R⁵-Si(OR⁴)₃
wherein R³ and R⁴ are alkyl or aryl groups, and R⁵ is an alkylene, arylene or aralkylene group.

7. The film of claim 1 wherein the hydrolysable silanes comprise organo-functional alkoxy silanes, comprising an organo-functional alkoxy silane of the formula:
R¹-Si(OR²)₃
wherein R¹ and R² are alkyl or aryl groups, and
an organo-functional alkoxy silane of the formula:
(R³O)₃Si-R⁵-Si(OR⁴)₃
wherein R³ and R⁴ are alkyl or aryl groups, and R⁵ is an alkylene, arylene or aralkylene group.

8. A method for preparing a film comprising:
providing a substrate;
providing a precursor reaction mixture comprising:
a solvent;
at least two organo-functional hydrolysable silanes; and
an acid, wherein the precursor reaction mixture is free of porogens;
coating the precursor mixture on the substrate; and
heating the coated mixture to a temperature sufficient to form a calcined film, wherein the film comprises: a hydrophobic, amorphous, substantially microporous, organo-functional organosilicate composition comprising micropores which define a pore volume, wherein the organo-functional organosilicate composition comprises RSiO₃ units linked through bridging Si-O-Si linkages in a silica matrix, where R is a hydrocarbon group or substituted hydrocarbon group, and wherein the R group is bonded to the silica matrix by a covalent Si-C bond, wherein at least 50% of the total pore volume comprises pores with a diameter of 2.0 nanometers or less.

9. The method of claim 8 wherein the heating comprises heating to a temperature in the range 200-500°C.

## Patentansprüche

1. Eine Folie, umfassend:
eine hydrophobe, amorphe, im Wesentlichen mikroporöse, organofunktionelle Organosilikatzusammensetzung, umfassend Mikroporen, die ein Porenvolumen definieren, und wobei die organofunktionelle Organosilikatzusammensetzung eine Zusammensetzung umfasst, die aus einem Vorläuferreaktionsgemisch hergestellt ist, umfassend:
ein Lösemittel;
mindestens zwei organofunktionelle hydrolysierbare Silane, und
eine Säure, wobei das Vorläuferreaktionsgemisch frei von Porogenen ist; und
wobei die organofunktionelle Organosilikatzusammensetzung RSiO₃-Einheiten umfasst, die durch überbrückende Si-O-Si-Bindungen in einer Siliziumdioxidmatrix verbunden sind, wobei es sich bei R um eine Kohlenwasserstoffgruppe oder substituierte Kohlenwasserstoffgruppe handelt, und wobei die R-Gruppe durch eine kovalente Si-C-Bindung an die Siliziumdioxidmatrix gebunden ist, wobei mindestens 50 % des gesamten Porenvolumens Poren mit einem Durchmesser von 2,0 Nanometern oder weniger umfasst.

2. Folie nach Anspruch 1, wobei die Folie Wasser in weniger als 30 % des verfügbaren Porenvolumens bei einer relativen Feuchtigkeit von 50 % im Gleichgewicht adsorbiert.

3. Folie nach Anspruch 1, wobei die Zusammensetzung beim Scannen von 0,5 bis 55 Grad (2θ) kein nachweisbares Röntgenbeugungsmuster aufweist.

4. Folie nach Anspruch 1, wobei mindestens 50 % des gesamten Porenvolumens Poren mit einem Durchmesser von 0,6 bis 1,3 Nanometern umfassen.

5. Folie nach Anspruch 1, wobei die hydrolysierbaren Silane organofunktionelle Alkoxysilane umfassen, wobei mindestens ein organofunktionelles Alkoxysilan der Formel entspricht:
R¹-Si(OR²)₃
worin es sich bei R¹ und R² um Alkyl- oder Aryl-Gruppen handelt.

6. Folie nach Anspruch 1, wobei die hydrolysierbaren Silane organofunktionelle Alkoxysilane umfassen, wobei mindestens ein organofunktionelles Alkoxysilan der Formel entspricht:
(R³O)₃Si-R⁵-Si(OR⁴)₃
worin es sich bei R³ und R⁴ um Alkyl- oder Arylgruppen und bei R⁵ um eine Alkylen-, Arylen- oder Aralkylen-Gruppe handelt.

7. Folie nach Anspruch 1, worin die hydrolysierbaren Silane organofunktionelle Alkoxysilane umfassen, umfassend ein organofunktionelles Alkoxysilan der Formel:
R¹-Si(OR²)₃
worin es sich bei R¹ und R² um Alkyl- oder Aryl-Gruppen handelt, und ein organofunktionelles Alkoxysilan der Formel:
(R³O)₃Si-R⁵-Si(OR⁴)₃
worin es sich bei R³ und R⁴ um Alkyl- oder Arylgruppen und bei R⁵ um eine Alkylen-, Arylen- oder Aralkylen-Gruppe handelt.

8. Verfahren zur Herstellung einer Folie, umfassend:
Bereitstellen eines Substrats;
Bereitstellen eines Vorläuferreaktionsgemischs, umfassend:
ein Lösemittel;
mindestens zwei organofunktionelle hydrolysierbare Silane, und
eine Säure, wobei das Vorläuferreaktionsgemisch frei von Porogenen ist;
Beschichten des Vorläufergemischs auf dem Substrat; und
Erhitzen des beschichteten Gemischs auf eine Temperatur, die ausreicht, um einen kalzinierten Film zu bilden, wobei der Film umfasst: eine hydrophobe, amorphe, im Wesentlichen mikroporöse, organofunktionelle Organosilikatzusammensetzung, umfassend Mikroporen, die ein Porenvolumen definieren, wobei die organofunktionelle Organosilikatzusammensetzung RSiO₃-Einheiten umfasst, die durch überbrückende Si-O-Si-Bindungen in einer Siliziumdioxidmatrix verbunden sind, wobei es sich bei R um eine Kohlenwasserstoffgruppe oder substituierte Kohlenwasserstoffgruppe handelt und wobei die R-Gruppe durch eine kovalente Si-C-Bindung an die Siliziumdioxidmatrix gebunden ist, wobei mindestens 50 % des gesamten Porenvolumens Poren mit einem Durchmesser von 2,0 Nanometer oder weniger umfasst.

9. Verfahren nach Anspruch 8, wobei das Erhitzen das Erhitzen auf eine Temperatur im Bereich von 200-500 °C umfasst.

## Revendications

1. Film comprenant :
une composition d'organosilicate à fonction organique hydrophobe, amorphe, essentiellement microporeuse comprenant des micropores qui définissent un volume de pores, et dans lequel la composition d'organosilicate à fonction organique comprend une composition préparée à partir d'un mélange réactionnel précurseur comprenant :
un solvant ;
au moins deux silanes hydrolysables à fonction organique ; et
un acide, dans lequel le mélange réactionnel précurseur est exempt d'agents porogènes ; et
dans lequel la composition d'organosilicate à fonction organique comprend des motifs RSiO₃ liés par le biais de liaisons Si-O-Si dans une matrice de silice, où R est un groupe hydrocarboné ou un groupe hydrocarboné substitué, et dans lequel le groupe R est lié à la matrice de silice par une liaison covalente Si-C, dans lequel au moins 50 % du volume de pores total comprend des pores avec un diamètre de 2,0 nanomètres ou moins.

2. Film selon la revendication 1, dans lequel le film adsorbe l'eau dans moins de 30 % du volume de pore disponible à une humidité relative de 50 % à l'équilibre.

3. Film selon la revendication 1, dans lequel la composition ne présente pas de motif de diffraction des rayons X détectable lors d'un balayage de 0,5 à 55 degrés (2θ).

4. Film selon la revendication 1, dans lequel au moins 50 % du volume de pores total comprend des pores avec un diamètre de 0,6 à 1,3 nanomètre.

5. Film selon la revendication 1, dans lequel les silanes hydrolysables comprennent des alcoxysilanes à fonction organique, dans lequel au moins un alcoxysilane à fonction organique est de formule :
R¹-Si(OR²)₃
dans lequel R¹ et R² sont des groupes alkyle ou aryle.

6. Film selon la revendication 1, dans lequel les silanes hydrolysables comprennent des alcoxysilanes à fonction organique, dans lequel au moins un alcoxysilane à fonction organique est de formule :
(R³O)₃Si-R⁵-Si(OR⁴)₃
dans lequel R³ et R⁴ sont des groupes alkyle ou aryle, et R⁵ est un groupe alkylène, arylène ou aralkylène.

7. Film selon la revendication 1, dans lequel les silanes hydrolysables comprennent des alcoxysilanes à fonction organique comprenant un alcoxysilane à fonction organique de formule :
R¹-Si(OR²)₃
dans lequel R¹ et R² sont des groupes alkyle ou aryle, et
un alcoxysilane à fonction organique de formule :
(R³O)₃Si-R⁵-Si(OR⁴)₃
dans lequel R³ et R⁴ sont des groupes alkyle ou aryle, et R⁵ est un groupe alkylène, arylène ou aralkylène.

8. Procédé de préparation d'un film, comprenant :
la fourniture d'un substrat ;
la fourniture d'un mélange réactionnel précurseur comprenant :
un solvant ;
au moins deux silanes hydrolysables à fonction organique ; et
un acide, dans lequel le mélange réactionnel précurseur est exempt d'agents porogènes ;
le revêtement du mélange précurseur sur le substrat ; et
le chauffage du mélange revêtu à une température suffisante pour former un film calciné, dans lequel le film comprend : une composition d'organosilicate à fonction organique hydrophobe, amorphe, essentiellement microporeuse comprenant des micropores qui définissent un volume de pores, dans lequel la composition d'organosilicate à fonction organique comprend des motifs RSiO₃ liés par le biais de liaisons Si-O-Si dans une matrice de silice, où R est un groupe hydrocarboné ou un groupe hydrocarboné substitué, et dans lequel le groupe R est lié à la matrice de silice par une liaison covalente Si-C, dans lequel au moins 50 % du volume de pores total comprend des pores avec un diamètre de 2,0 nanomètres ou moins.

9. Procédé selon la revendication 8, dans lequel le chauffage comprend le chauffage à une température dans la plage de 200 à 500 °C.
